# EUROPÄISCHE PATENTSCHRIFT

(11) **EP 2 215 609 B1**
(45) Veröffentlichungstag und Bekanntmachung des Hinweises auf die Patenterteilung: **24.07.2019**
(21) Anmeldenummer: 08844250.4
(22) Anmeldetag: 23.10.2008
(51) Int. Cl.: H04L 9/32, G07F 7/10, G06Q 20/34

(54) **VERFAHREN ZUM FREISCHALTEN EINER CHIPKARTENFUNKTION MITTELS FERNÜBERPRÜFUNG**
METHOD FOR RELEASING THE FUNCTION OF A CHIP CARD BY MEANS OF A REMOTE CHECK
PROCÉDÉ DE DÉVERROUILLAGE D'UNE FONCTION DE CARTE À PUCE AU MOYEN D'UN CONTRÔLE À DISTANCE

(30) Priorität: 29.10.2007 DE 102007000587
(43) Veröffentlichungstag der Anmeldung: 11.08.2010
(73) Patentinhaber: Bundesdruckerei GmbH, 10958 Berlin (DE)
(72) Erfinder: SCHOLZE, Steffen, 10249 Berlin (DE); BYSZIO, Frank, 16348 Wandlitz (DE)
(74) Vertreter: Richardt Patentanwälte PartG mbB
(86) Internationale Anmeldenummer: PCT/EP2008/064386
(87) Internationale Veröffentlichungsnummer: WO 2009/056484

(56) Entgegenhaltungen:
- EP-A- 0 776 141
- EP-A- 1 467 312
- US-A- 5 241 599
- JABLON D P: "STRONG PASSWORD-ONLY AUTHENTICATED KEY EXCHANGE" COMPUTER COMMUNICATION REVIEW, ACM, NEW YORK, NY, US, Bd. 26, Nr. 5, 1. Oktober 1996 (1996-10-01), Seiten 5-26, XP000641968 ISSN: 0146-4833 in der Anmeldung erwähnt

## Beschreibung

Die Erfindung betrifft ein Verfahren zum Freischalten einer Chipkartenfunktion einer Chipkarte, eine Chipkarte und ein Kartenlesegerät.

Für die Freischaltung einer Chipkarten-Funktion kann eine zuvorige Benutzeridentifizierung gegenüber der Chipkarte erforderlich sein, wie es aus dem Stand der Technik an sich bekannt ist. Die häufigste Benutzeridentifizierung ist die Eingabe einer geheimen Kennung, welche im Allgemeinen als PIN (Personal Identification Number) oder als CHV (Card Holder Verification) bezeichnet wird. Solche Kennungen bestehen im Allgemeinen aus einer numerischen oder alphanumerischen Zeichenkette. Zur Benutzeridentifizierung wird die Kennung von dem Benutzer auf der Tastatur eines Chipkarten-Terminals oder eines Computers, an den ein Chipkarten-Leser angeschlossen ist, eingegeben, und dann zu der Chipkarte gesendet. Diese vergleicht die eingegebene Kennung mit der gespeicherten Kennung und teilt dann das Ergebnis dem Terminal bzw. dem Computer durch Ausgabe eines entsprechenden Signals mit.

Die sogenannten Super-PINs oder PUKs (Personal Unlocking Key) haben in der Regel mehr Stellen als die eigentliche PIN, und werden dazu benutzt, einen auf seinem Minimalwert stehenden Fehleingabezähler (wird auch als "Fehlbedienungszähler" bezeichnet) einer PIN wieder auf seinen initialen Maximalwert zurückzusetzen. Mit der PUK wird auch gleich eine neue PIN an die Chipkarte übergeben, weil ein zurückgesetzter Fehlbedienungszähler wenig nützt, wenn man die PIN vergessen hat. Und dies ist ja meist der Fall, wenn der Fehlbedienungszähler seinen Maximalwert erreicht hat. Für Chipkarten im Umfeld des Signaturgesetzes ist die Verwendung bzw. Anwendung von Super-PINs oder PUKs jedoch aus Sicherheitsgründen darauf beschränkt, dass lediglich der Fehlbedienungszähler zurückgesetzt wird. Eine neue PIN wird nicht übergeben. Hier muss eine neue Chipkarte beantragt werden, wenn die PIN vergessen wurde.

Nach der zum Anmeldezeitpunkt unveröffentlichten DE 10 2007 008 651 derselben Anmelderin wird eine Chipkarte geschaffen, in der zumindest zwei geheime Kennungen, beispielsweise zwei PINs, zum Schutz derselben Chipkarten-Funktion gespeichert sind. Dem berechtigten Benutzer der Chipkarte wird von dem Herausgeber der Chipkarte zunächst nur eine der Kennungen mitgeteilt. Wenn der Benutzer diese Kennung vergisst, so kann er eine Anforderung an den Herausgeber der Chipkarte richten, um von dort die zweite auf seiner Chipkarte gespeicherte Kennung zu erhalten.

Aus dem Stand der Technik sind Chipkarten bekannt, die eine kontaktlose Schnittstelle zur drahtlosen Kommunikation mit einem Chipkarten-Terminal aufweisen. Die kontaktlose Schnittstelle kann beispielsweise RFID-Interface ausgebildet sein.

Aus EP 1 467 312 A1 ist eine Überlappanwendung bekannt, bei der jede Anwendung eine eigene PIN zugewiesen sein kann. Beispielsweise können die Anwendungen "lesen" und "lesen/schreiben" in Bezug auf ein Anwendungsspeicherfeld gestartet werden, wobei zwei PINs gesetzt werden.

Aus EP 0 776 141 A2 ist ein Verfahren zur Überprüfung einer PIN eines Nutzers in einem mobilen Gerät bekannt. Das Verfahren umfasst die Schritte des Überprüfens der Gültigkeit der eingegebenen PIN und sperren des mobilen Geräts. Das Gerät wird entsperrt, wenn die geschützte Identität des Nutzers bekannt ist.

Der Erfindung liegt demgegenüber die Aufgabe zugrunde, ein verbessertes Verfahren zum Freischalten einer Chipkartenfunktion einer Chipkarte mit einer kontaktlosen Schnittstelle, eine Chipkarte und ein Kartenlesegerät zu schaffen.

Die der Erfindung zugrunde liegenden Aufgaben werden jeweils mit den Merkmalen der unabhängigen Patentansprüche gelöst. Bevorzugte Ausführungsformen sind in den abhängigen Patentansprüchen angegeben.

Erfindungsgemäß wird ein Verfahren zum Freischalten einer Chipkartenfunktion einer Chipkarte geschaffen, wobei zur Freischaltung der Chipkartenfunktion die Eingabe einer ersten Kennung, wie zum Beispiel einer PIN, erforderlich ist, und wobei die Chipkarte eine erste kontaktlose Schnittstelle hat. Zur Freischaltung der Chipkartenfunktion werden die folgenden Schritte durchgeführt: Eingabe einer zweiten Kennung in einen Kartenleser, der eine zweite kontaktlose Schnittstelle hat, Übertragung einer Anforderung zur Fernüberprüfung der zweiten Kennung von der zweiten kontaktlosen Schnittstelle des Kartenlesers an die erste kontaktlose Schnittstelle der Chipkarte, Überprüfung durch die Chipkarte, ob die aktuell zur Verfügung stehende Anzahl von Eingabeversuchen für eine korrekte Eingabe der ersten Kennung zur Freischaltung der Chipkartenfunktion über einer vorgegebenen Mindestanzahl liegt, und wenn dies der Fall ist, Durchführung der Fernüberprüfung, und wenn dies nicht der Fall ist, Durchführung der folgenden Schritte: (i) Übertragung einer Anforderung zur Eingabe einer dritten Kennung in den Kartenleser von der ersten kontaktlosen Schnittstelle der Chipkarte an die zweite kontaktlose Schnittstelle des Kartenlesers, (ii) Eingabe der dritten Kennung in den Kartenleser, (iii) Übertragung der dritten Kennung von der zweiten kontaktlosen Schnittstelle des Kartenlesers an die erste kontaktlose Schnittstelle der Chipkarte, (iv) Vergleich der dritten Kennung mit einer in der Chipkarte gespeicherten vierten Kennung durch die Chipkarte, und nur wenn der Vergleich ergibt, dass die dritte Kennung mit der vierten Kennung übereinstimmt, Durchführung der Fernüberprüfung, wobei die Chipkartenfunktion freigeschaltet wird, wenn die Fernüberprüfung zum Ergebnis hat, dass die zweite Kennung mit der ersten Kennung übereinstimmt, und wobei die Anzahl der aktuell zur Verfügung stehenden Eingabeversuche reduziert wird, wenn die zweite Kennung nicht mit der ersten Kennung übereinstimmt

Unter einer "Fernüberprüfung" wird hier jedes Verfahren verstanden, bei dem die zu überprüfende Kennung nicht in die Chipkarte eingegeben werden muss, um sie mit der dort gespeicherten Kennung zu vergleichen, sondern bei dem die Überprüfung mittels eines den Kartenleser und die Chipkarte involvierenden Protokolls erfolgt. Entsprechende Protokolle sind an sich aus dem Stand der Technik bekannt, wie zum Beispiel Strong Password Only Authentication Key Exchange (SPEKE), Diffie-Hellman Encripted Key Exchange (DH-EKE), Bellovin-Merritt Protokoll oder Password Authenticated Connection Establishment (PACE).

Das SPEKE-Protokoll ist beispielsweise bekannt aus www.jablon.org/speke97.html, US 6,792,533 B2 und US 7,139,917 B2.

Unter anderem ebenfalls aus www.jablon.org/speke97.html ist das DH-EKE-Protokoll bekannt.

Unter anderem aus US 5,241,599 ist das Bellovin-Merritt-Protokoll bekannt.

Aus www.heise.de/securitv/news/meldung/85024 ist das PACE-Protokoll bekannt, welches sich besonderes für elliptische Kurven-Kryptographie eignet.

Die vorliegende Erfindung ist besonders vorteilhaft da sie einen wirksamen Schutz gegen sogenannte Denial-of-Service Attacken bietet. Die Existenz dieses Problems im Zusammenhang mit der Fernüberprüfung nach dem SPEKE-Verfahren wurde bereits in den zitierten US 6,792,533 B2 und US 7,139,917 B2 erkannt, bisher aber nicht zufrieden stellend gelöst.

Die Erfindung schafft hier Abhilfe, indem die Chipkarte gegen Sperrung der Chipkartenfunktion aufgrund von Denial-of-Service Attacken mit Hilfe einer zusätzlichen vierten Kennung geschützt wird. Die vierte Kennung ist wie die erste Kennung in der Chipkarte gespeichert. Bevor die Chipkarte eine von dem Kartenleser angeforderte Fernüberprüfung der ersten Kennung vornimmt, prüft die Chipkarte zunächst, ob noch eine Mindestanzahl von Eingabeversuchen für weitere Eingaben der ersten Kennung verbleibt. Beispielsweise hat die Chipkarte hierzu einen sogenannten Fehlbedienungszähler, der die Anzahl der fehlgeschlagenen Eingabeversuche der ersten Kennung zählt. Wenn beispielsweise nur noch ein einziger Eingabeversuch verbleibt, bis die Chipkartenfunktion gesperrt wird, so fordert die Chipkarte zunächst die Eingabe der zusätzlichen dritten Kennung an. Nur wenn die eingegebene zusätzliche dritte Kennung mit der in der Chipkarte gespeicherten vierten Kennung übereinstimmt, führt die Chipkarte nachfolgend die Fernüberprüfung durch. Dadurch wird wirksam vermieden, dass ein Dritter ohne in Kenntnis der ersten Kennung zu sein, wiederholt eine Fernüberprüfung einer von ihm zufällig gewählten nicht zutreffenden zweiten Kennung durch die Chipkarte veranlasst, aufgrund dessen der Fehlbedienungszähler wiederholt inkrementiert oder dekrementiert und damit die Chipkarte gesperrt und unter Umständen unbrauchbar gemacht werden würde.

Nach einer Ausführungsform der Erfindung kann die vierte Kennung von einem Benutzer der Chipkarte im Klartext visuell erfasst werden. Beispielsweise ist die vierte Kennung auf der Chipkarte aufgedruckt oder kann auf einem Display der Chipkarte angezeigt werden. Ein Dritter, der beabsichtigt, eine Denial-of-Service Attacke auszuführen, ist aber nicht in Besitzt der Chipkarte, so dass er auch nicht von der vierten Kennung Kenntnis erlangen kann, ohne die aber eine Sperrung der Chipkarte aufgrund wiederholter Fehleingaben der ersten Kennung nicht möglich ist.

Insbesondere kann hierdurch vermieden werden, dass von dem Besitzer der Chipkarte unbemerkt über deren kontaktlose Schnittstelle wiederholt Fernüberprüfungen durchgeführt werden, etwa während sich die Chipkarte in der Brieftasche des Eigentümers der Chipkarte befindet. Insbesondere kann hierdurch auch vermieden werden, dass eine massenhafte Sabotage solcher Chipkarten stattfindet, etwa wenn sich eine große Anzahl von Personen, die jeweils eine Chipkarte haben, auf engem Raum befinden, wie zum Beispiel in einem öffentlichen Verkehrsmittel oder bei einer Großveranstaltung.

Nach einer Ausführungsform der Erfindung erfolgt die Übertragung der dritten Kennung von dem Kartenleser an die Chipkarte in einer geschützten Art und Weise, um ein Abhören der Übertragung der dritten Kennung durch einen Dritten, der eine Denial-of-Service Attacke durchführen möchte, zu verhindern.

Hierzu wird beispielsweise mit Hilfe eines ECDH-Protokolls ein symmetrischer Schlüssel zwischen dem Kartenleser und der Chipkarte ausgehandelt. Die in den Kartenleser eingegebene dritte Kennung wird mit Hilfe des symmetrischen Schlüssels verschlüsselt und dann an die Chipkarte übertragen, wo sie wieder mit demselben symmetrischen Schlüssel entschlüsselt wird, um sie mit der in der Chipkarte gespeicherten vierten Kennung zu vergleichen.

Nach einer Ausführungsform der Erfindung ist auf der Chipkarte eine Entsperrungskennung gespeichert, insbesondere eine sogenannte PUK. Durch Eingabe einer korrekten Entsperrungskennung in den Kartenleser und anschließende Fernüberprüfung kann ein Fehlbedienungszähler der ersten Erkennung zurückgesetzt werden. Zum Schutz gegen eine Denial-of-Service Attacke hinsichtlich der Entsperrungskennung kann analog vorgegangen werden wie zum Schutz der Chipkarte gegen Sperrung aufgrund mehrfacher Fehleingabe der ersten Kennung.

Nach einer Ausführungsform der Erfindung sind in der Chipkarte zwei verschiedene vierte Kennungen gespeichert, wobei eine der vierten Kennungen zum Schutz gegen eine Sperrung der Chipkarte aufgrund von Denial-of-Service Attacken durch wiederholte Fehleingaben der ersten Kennung und die andere der vierten Kennungen zum Schutz gegen eine Sperrung der Chipkarte aufgrund von Denial-of-Service Attacken durch wiederholte Fehleingaben der ersten Entsperrungskennung dient. Beide vierte Kennungen können auf der Chipkarte aufgedruckt sein oder sie können auf einer Anzeigevorrichtung der Chipkarte wiedergegeben werden.

In einem weiteren Aspekt betrifft die Erfindung eine Chipkarte mit mit zumindest einer Chipkartenfunktion (128), wobei zur Freischaltung der Chipkartenfunktion die Eingabe einer ersten Kennung erforderlich ist, mit: Mitteln zum Empfangen einer Anforderung zur Durchführung einer Fernüberprüfung einer in einen Kartenleser eingegebenen zweiten Kennung auf Übereinstimmung mit der ersten Kennung, wobei die Mittel zum Empfangen eine erste kontaktlose Schnittstelle aufweisen, Mitteln zur Überprüfung durch die Chipkarte, ob die aktuell zur Verfügung stehende Anzahl von Eingabeversuchen für eine korrekte Eingabe der ersten Kennung zur Freischaltung der Chipkartenfunktion über einer vorgegebenen Mindestanzahl liegt, Mitteln zur Durchführung der Fernüberprüfung, Mitteln zur Durchführung der folgenden Schritte, wenn die aktuell zur Verfügung stehende Anzahl von Eingabeversuchen für die korrekte Eingabe der ersten Kennung nicht über einer vorgegebenen Mindestanzahl liegt : (i) Übertragung einer Anforderung zur Eingabe einer dritten Kennung in den Kartenleser von der ersten kontaktlosen Schnittstelle der Chipkarte an eine zweite kontaktlose Schnittstelle des Kartenlesers, (ii) Empfang der dritten Kennung durch die erste kontaktlose Schnittstelle der Chipkarte, (iii) Vergleich der dritten Kennung mit einer in der Chipkarte gespeicherten vierten Kennung, und nur wenn der Vergleich ergibt, dass die dritte Kennung mit der vierten Kennung übereinstimmt, Auslösung der Fernüberprüfung, Mitteln zur Freischaltung der Chipkartenfunktion, wenn die Fernüberprüfung zum Ergebnis hat, dass die zweite Kennung mit der ersten Kennung übereinstimmt, und wobei die Anzahl der aktuell zur Verfügung stehenden Eingabeversuche reduziert wird, wenn die zweite Kennung nicht mit der ersten Kennung übereinstimmt.

In einem weiteren Aspekt betrifft die Erfindung ein Kartenlesergerät für eine Chipkarte, wobei die Chipkarte eine freischaltbare Chipkartenfunktion hat, wobei zur Freischaltung der Chipkartenfunktion die Eingabe einer ersten Kennung erforderlich ist, und wobei die Chipkarten eine erste kontaktlose Schnittstelle hat, mit einer zweiten kontaktlosen Schnittstelle zur drahtlosen Kommunikation mit der ersten kontaktlosen Schnittstelle, Mitteln zur Eingabe einer zweiten Kennung, Mitteln zur Generierung einer Anforderung an die Chipkarte zur Durchführung einer Fernüberprüfung der zweiten Kennung auf Übereinstimmung mit der ersten Kennung durch den Kartenleser und die Chipkarte, Mitteln zur Durchführung der Fernüberprüfung, Mitteln zum Empfangen einer Aufforderung von der Chipkarte zur Eingabe einer dritten Kennung, zur Eingabe der dritten Kennung, und zur Übertragung der dritten Kennung von der zweiten kontaktlosen Schnittstelle an die erste kontaktlose Schnittstelle der Chipkarte.

Im Weiteren werden Ausführungsformen der Erfindung mit Bezugnahme auf die Zeichnungen näher erläutert. Es zeigen:
- Fig. 1: ein Blockdiagramm einer Ausführungsform einer erfindungsgemäßen Chipkarte und eines erfindungsgemäßen Kartenlesers,
- Fig. 2: ein Flussdiagramm einer ersten Ausführungsform eines erfindungsgemäßen Verfahrens,
- Fig. 3: ein Flussdiagramm einer zweiten Ausführungsform eines erfindungsgemäßen Verfahrens.

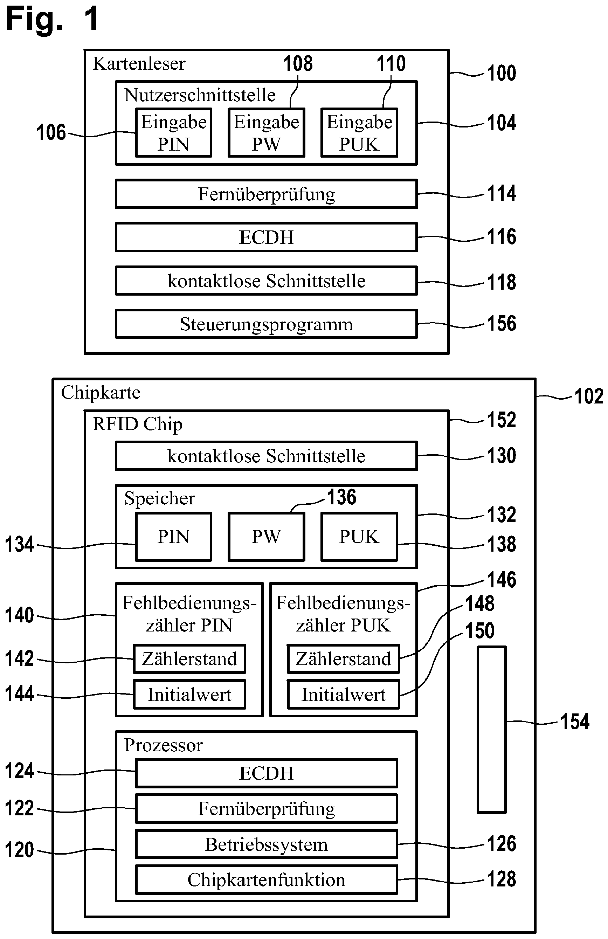

Die Fig. 1 zeigt einen Kartenleser 100 für eine Chipkarte 102. Der Kartenleser 100 kann als Chipkartenterminal oder als Chipkartenlesegerät, welches an einen Computer angeschlossen ist, ausgebildet sein. Der Kartenleser 100 verfügt über eine Nutzerschnittstelle 104, wie zum Beispiel eine Tastatur und/oder eine grafischen Benutzeroberfläche. Die Nutzerschnittstelle verfügt beispielsweise über Eingabefelder 106, 108 und 110 zur Eingabe einer zweiten Kennung, einer dritten Kennung und einer zweiten Entsperrkennung. Bei der zweiten Kennung handelt es sich beispielsweise um eine sogenannte PIN, die zur Freischaltung einer Chipkartenfunktion der Chipkarte 102 vorgesehen ist. Bei der dritten Kennung handelt es sich beispielsweise um ein Passwort, welches in der Chipkarte 102 gespeichert ist und zusätzlich auf der Chipkarte 102 aufgedruckt sein kann. Bei der zweiten Entsperrungskennung kann es sich um eine sogenannte PUK handeln, die zur Entsperrung der Chipkartenfunktion eingegeben werden kann.

Der Kartenleser 100 dient zur Ausführung von Programminstruktionen 114 für die Durchführung derjenigen Schritte eines Protokolls zur Fernüberprüfung, die den Kartenleser 100 betreffen. Ferner kann der Kartenleser 100 zur Ausführung von Programminstruktionen 116 dienen, die ein Protokoll zur Aushandlung eines symmetrischen Schlüssels implementieren, wie zum Beispiel ein ECDH-Protokoll. Der Kartenleser 100 dient ferner zur Ausführung eines Steuerungsprogramms, welches beispielsweise Teil eines Betriebssystems oder eines Anwendungsprogramms des Kartenleser sein kann. Der Kartenleser 100 verfügt ferner über eine kontaktlose Schnittstelle 118, die zum Beispiel als Funkschnittstelle, insbesondere als RFID-Schnittstelle ausgebildet sein kann.

Bei der Chipkarte 102 handelt es sich um eine sogenannte Prozessorchipkarte mit einem Prozessor 120. Der Prozessor 120 dient zur Ausführung von Programminstruktionen 122 zur Ausführung der die Chipkarte 102 betreffenden Schritte eines Protokolls zur Fernüberprüfung. Der Prozessor 120 kann ferner zur Ausführung von Programminstruktionen 124 dienen , die zur Aushandlung eines symmetrischen Schlüssels mit dem Kartenleser 100 zum Beispiel nach dem ECDH-Protokoll dienen.

Ferner dient der Prozessor 120 zur Ausführung von Programminstruktionen 126 zur Verfügungstellung eines Chipkartenbetriebssystems und zur Ausführung von Programminstruktionen 128 zur Verfügungsstellung einer Chipkartenfunktion, wie zum Beispiel einer digitalen Signaturfunktion, einer Bezahlfunktion oder dergleichen.

Die Chipkarte 102 hat eine kontaktlose Schnittstelle 130, die beispielsweise zur Kommunikation über Funk, insbesondere nach einem RFID-Verfahren mit der kontaktlosen Schnittstelle 118 des Kartenlesers 100 ausgebildet ist.

Die Chipkarte 102 hat ferner einen nicht flüchtigen elektronischen Speicher 132 mit geschützten Speicherbereichen 134, 136 und 138 zur Speicherung einer ersten Kennung, einer vierten Kennung und einer ersten Ersatzkennung. Die erste Kennung dient dabei als Referenzwert für die in das Eingabefeld 106 eingegebene zweite Kennung; beispielsweise handelt es sich bei der ersten Kennung um einen Referenzwert für die PIN; die vierte Kennung dient als Referenzkennung für die in das Datenfeld 108 eingegebene dritte Kennung und die erste Ersatzkennung dient als Referenzwert für die in das Eingabefeld 110 eingegebene zweite Ersatzkennung. Im Weiteren wird die erste Kennung ohne Beschränkung der Allgemeinheit als PIN, die vierte Kennung als Passwort (PW) und die erste Ersatzkennung als PUK bezeichnet.

Die Chipkarte 102 hat einen Fehlbedienungszähler 140 für die PIN. Der Fehlbedienungszähler 140 hat ein Register 142, welches den aktuellen Zählerstand des Fehlbedienungszählers 140 beinhaltet und einen Speicher 144, in dem ein Initialwert gespeichert wird, auf den der Zählerstand zurückgesetzt wird, wenn die Chipkartenfunktion freigeschaltet oder entsperrt wird. Beispielsweise ist der Initalwert = 3. Mit jeder Fehleingabe der PIN wird der Zählerstand dekrementiert bis der Zählerstand = 0 ist. Bei einem Zählerstand von Null ist kein weiterer Eingabeversuch der PIN mehr möglich, so dass die Chikartenfunktion gesprerrt ist. Eine Entsprerrung der Chipkartenfunktion und eine Rücksetzung des Zählerstandes erfolgt durch eine korrekte Eingabe der PUK.

Entsprechend verhält es sich für den Fehlbedienungszähler 146 der PUK, welcher ein entsprechendes Register 148 und einen Speicher zur Speicherung eines Initialwerts aufweist. Wenn die Chipkartenfunktion durch eine zutreffende Eingabe der PUK entsperrt wird, wird der Zählerstand in dem Register 148 auf den Initialwert des Speichers 150 zurückgesetzt.

Die Funktionalitäten der Fehlbedienungszähler 140 und 146 sowie die Speicherung der PIN, des PW und der PUK können ganz oder teilweise in dem Betriebssystem der Chipkarte 102 implementiert sein, beispielsweise in Form sogenannter PIN bzw. PUK Objekte.

Die oben beschriebenen elektronischen Komponenten der Chipkarte können ganz oder teilweise in einen RFID-Chip 152 implementiert sein, der in einem Chipkartenkörper der Chipkarte 102 implantiert ist.

Die Chipkarte 102 kann einen Aufdruck 154 aufweisen, der das PW im Klartext zeigt, so dass es ein Benutzer der Chipkarte lesen kann. Statt eines Aufdrucks kann auch eine Anzeigevorrichtung vorhanden sein, die das PW anzeigt.

Zur Freischaltung der Chipkartenfunktion der Chipkarte 102 wird wie folgt vorgegangen:
Ein Benutzer gibt in den Kartenleser 100, wie zum Beispiel in das Eingabefeld 106, eine PIN ein. Daraufhin generieren die Programminstruktionen 114 eine Anforderung an die Chipkarte 102, die über die kontaktlosen Schnittstellen 118, 1130 übertragen wird. Nach Empfangen der Anforderung überprüft die Chipkarte zunächst den in dem Register 142 gespeicherten Zählerstand.

Der Zählerstand muss so sein, dass eine Anzahl von Eingabeversuchen der PIN noch zur Verfügung stehen muss, die oberhalb einer vorgegebenen Mindestanzahl liegt. Beispielsweise kann in dem Betriebssystem der Chipkarte 102 festgelegt sein, dass diese Mindestanzahl gleich 1 ist. Damit die Chipkarte die angeforderte Fernüberprüfung vornimmt, muss der Zählerstand des Registers 142 also mindestens gleich 2 sein, so dass es sich bei aktuellen Eingabeversuch der PIN nicht um den letzten möglichen Eingabeversuch handelt, bevor der Zählerstand auf 0 dekrementiert wird, und damit die Chipkartenfunktion gesperrt ist.

Wenn der Zählerstand in dem hier betrachteten Beispiel also größer als 1 ist, d.h. beispielsweise 2 oder 3 beträgt, so wird durch Ausführung der Programminstruktionen 114 und 122 anschließend eine Fernüberprüfung der in das Eingabefeld 106 eingegebenen PIN vorgenommen. Falls diese Fernüberprüfung erfolgreich ist, wird anschließend die Chipkartenfunktion 128 freigeschaltet; ist das Gegenteil der Fall, so wird der Zählerstand in dem Register 142 dekrementiert. Erreicht der Zählerstand hierbei einen vorgegebenen Minimalwert, von zum Beispiel 0, so ist die Chipkartenfunktion damit gesperrt.

Wenn die Überprüfung des Zählerstandes in dem Register 142 hingegen ergibt, dass der aktuelle Eingabeversuch der PIN zugleich der letzte mögliche Eingabeversuch ist, bevor die Chipkartenfunktion gesperrt wird, so sendet die Chipkarte 102 eine Anforderung an den Kartenleser 100 zur Eingabe des PW. Der Benutzer muss dann das PW in das Eingabefeld 108 eingeben, so dass es von dem Kartenleser an die Chipkarte 102 übertragen wird. Die Chipkarte 102 prüft sodann, ob das von dem Kartenleser 100 empfangene PW mit dem in dem Speicherbereich 136 gespeicherten Referenzwert übereinstimmt. Wenn dies der Fall ist, willigt die Chipkarte 102 in die Durchführung der ursprünglich von dem Kartenleser 100 angeforderten Fernüberprüfung ein.

Zur Eingabe des PW kann der Benutzer dieses zum Beispiel von dem Aufdruck 154 der Chipkarte 102 ablesen. Von besonderem Vorteil ist hierbei, dass der Benutzer nur die PIN, nicht aber das PW auswendig lernen muss.

Wenn kein PW oder ein nicht zutreffendes PW von der Chipkarte empfangen worden ist, welches nicht mit dem in dem Speicherbereich 136 gespeicherten Referenzwert übereinstimmt, so wird die Kommunikation mit dem Kartenleser 100 abgebrochen.

Vorzugsweise erfolgt die Übertragung des in das Eingabefeld 108 eingegebenen PWs von dem Kartenleser 100 an die Chipkarte 102 nicht im Klartext, um ein Abhören der Übertragung durch einen Dritten, der eine Denial-of-Service Attacke vornehmen möchte, zu verhindern. Hierzu wird durch Ausführung der Programminstruktionen 116 und 124 ein ECDH-Protokoll ausgeführt, durch welches der Kartenleser 100 und die Chipkarte 102 einen symmetrischen Schlüssel festlegen. Mit Hilfe dieses symmetrischen Schlüssels wird das in das Eingabefeld 100 eingegebene PW verschlüsselt und das entsprechend Chiffrat wird von dem Kartenleser 100 an die Chipkarte 102 übertragen. Die Chipkarte entschlüsselt das Chiffrat mit Hilfe des symmetrischen Schlüssels und prüft dann, ob das Ergebnis der Entschlüsselung mit dem in dem Speicherbereich 136 gespeicherten Referenzwert des PW übereinstimmt.

Falls die Chipkartenfunktion durch wiederholte fehlerhafte Eingabe der PIN durch den Benutzer gesperrt ist, so kann eine Entsperrung vorgenommen werden, indem eine zutreffende PUK in den Kartenleser eingegeben wird. Auch für die PUK gibt es nur eine vorgegebene maximale Anzahl von Eingabeversuchen bevor die Chipkartenfunktion endgültig gesperrt wird. Diese maximale Anzahl von Eingabeversuchen ist zum Beispiel als Initialwert in dem Speicher 150 gespeichert. Der Zählerstand in dem Register 148 wird von dem Initialwert solange heruntergezählt, bis er einen Minimalwert von zum Beispiel 0 erreicht hat, was bedeutet, dass die betreffende Chipkartenfunktion dann endgültig gesperrt ist.

Zum Schutz der Chipkarte 102 gegen Denial-of-Service Attacken bezüglich der Entsperrung der Chipkartenfunktion wird analog zu der Eingabe der PIN verfahren: Nachdem die PUK in das Eingabefeld 110 eingegeben worden ist, erhält die Chipkarte 102 von dem Kartenleser 100 eine Anforderung zur Durchführung einer Fernüberprüfung der PUK. Eine solche Fernüberprüfung wird nur dann ohne weiteres durchgeführt, wenn der aktuelle Eingabeversuch der PUK nicht der letzte mögliche Eingabeversuch ist. Wenn es sich hingegen um den letzten möglichen Eingabeversuch handelt, so muss zunächst das PW eingegeben werden, um eine mögliche Denial-of-Service Attacke abzuwehren.

In der hier betrachteten Ausführungsform ist das PW zum Schutz gegen Denial-of-Service Attacken bezüglich der Eingabe der PIN und der PUK dasselbe. Es können aber auch zwei unterschiedliche PWs in der Chipkarte 102 gespeichert bzw. aufgedruckt sein, wobei eines der PWs der PIN und das andere der PWs der PUK zugeordnet ist.

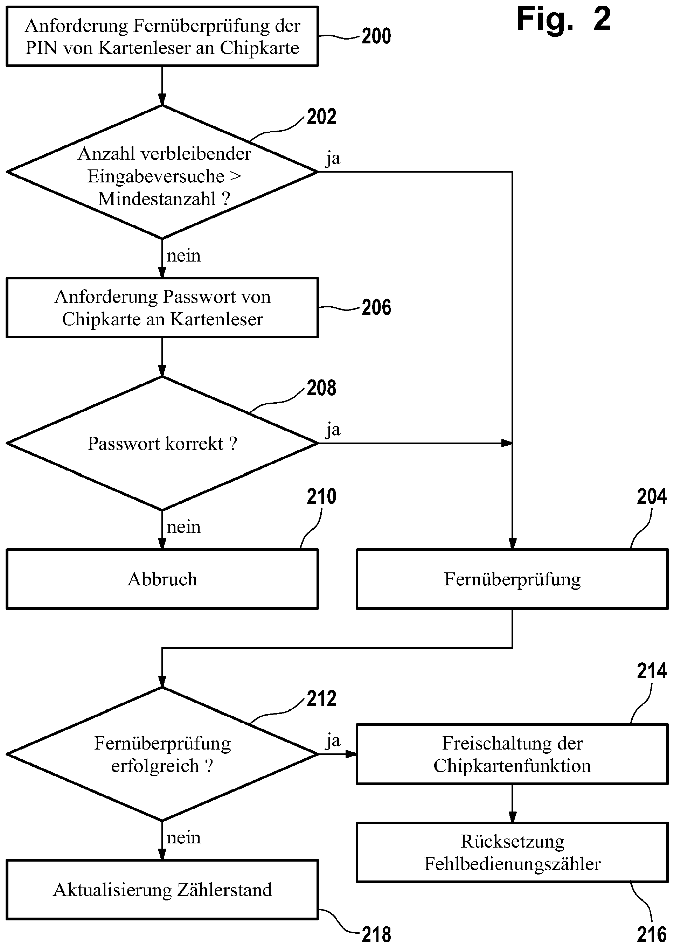

Die Fig. 2 zeigt ein entsprechendes Verfahren zum Freischalten einer Chipkartenfunktion durch Fernüberprüfung einer PIN.

In dem Schritt 200 wird eine PIN in den Kartenleser eingegeben und daraufhin eine Anforderung zur Fernüberprüfung der PIN von den Kartenleser an die Chipkarte übertragen. Die Chipkarte prüft daraufhin in dem Schritt 202, ob die Anzahl der verbleibenden Eingabeversuche für eine korrekte Eingabe der PIN bevor die Chipkartenfunktion gesperrt wird größer als eine vorgegebene Mindestanzahl solcher Eingabeversuche ist. Diese Mindestanzahl kann zum Beispiel gleich 1 sein, so dass es sich bei dem aktuellen Eingabeversuch der PIN nicht um den letzten möglichen Eingabeversuch handeln darf. Wenn also die Anzahl der verbleibenden Eingabeversuche größer als diese Mindestanzahl ist, so wird nachfolgend in dem Schritt 204 die Fernüberprüfung der PIN durch Ausführung eines den Kartenleser und die Chipkarte involvierenden Protokolls durchgeführt.

Wenn hingegen die Anzahl der verbleibenden Eingabeversuche gleich oder kleiner als die Mindestanzahl ist, so fordert die Chipkarte in dem Schritt 206 das Passwort PW von dem Kartenleser an. Der Benutzer muss daraufhin das PW in den Kartenleser eingeben, so dass dieses von dem Kartenleser an die Chipkarte übertragen wird. In dem Schritt 208 prüft die Chipkarte ob das Passwort korrekt ist, d.h. ob das von dem Kartenleser empfangene PW mit dem in der Chipkarten gespeicherten Referenzwert übereinstimmt. Ist dies der Fall, so wird die Fernüberprüfung in dem Schritt 204 durchgeführt; im gegenteiligen Fall erfolgt in dem Schritt 210 der Abbruch der Kommunikation der Chipkarte mit dem Kartenleser.

Auf den Schritt 204 folgt der Schritt 212. In dem Schritt 212 wird von der Chipkarte entschieden, ob die Fernüberprüfung erfolgreich war. Wenn dies der Fall ist, erfolgt in dem Schritt 214 die Freischaltung der der PIN zugeordneten Chipkartenfunktion und die Rücksetzung des der Chipkartenfunktion zugeordneten Fehlerbedienungszählers (vgl. Fehlbedienungszähler 140 der Fig. 1) in dem Schritt 216. Wenn die Fernüberprüfung nicht erfolgreich war, so wird in dem Schritt 218 der Zählerstand des Fehlbedienungszählers aktualisiert, beispielsweise also dekrementiert.

Alternativ ist es auch möglich, dass eine Dekrementierung des Zählerstands bereits vor Durchführung der Fernüberprüfung in dem Schritt 204 erfolgt, wobei die Dekrementierung dann wieder rückgängig gemacht wird, wenn die Fernüberprüfung erfolgreich war.

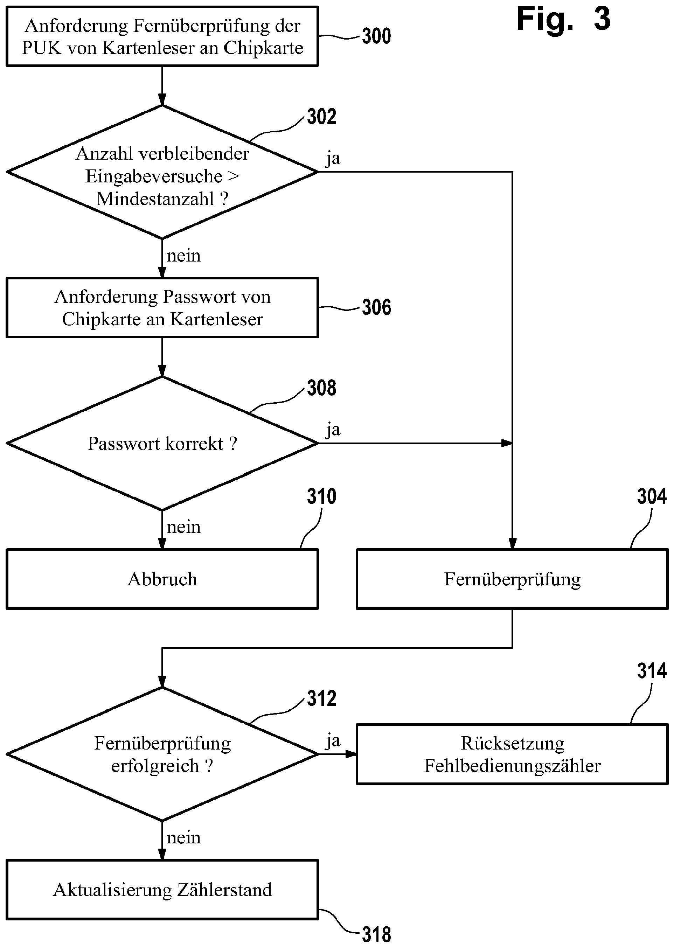

Die Fig. 3 zeigt ein Flussdiagramm zur Entsperrung der Chipkartenfunktion, nachdem die Chipkartenfunktion aufgrund wiederholter Fehleingabe der PIN gesperrt worden ist. Schritte des Flussdiagramms der Fig. 3, die Schritten des Flussdiagramms der Fig. 2 entsprechen sind dabei entsprechend nummeriert.

In dem Schritt 300 gibt ein Benutzer eine PUK in den Kartenleser ein. Daraufhin überträgt der Kartenleser an die Chipkarte an Anforderung zur Fernüberprüfung der PUK. Die Schritte 302 bis 318 laufen dann analog zu den Schritten 202 bis 218 der Fig. 2 ab, und zwar bezüglich der Fernüberprüfung der PUK anstelle der PIN. Falls die Fernüberprüfung erfolgreich war, werden in dem Schritt 314 die Fehlbedienungszähler sowohl der PIN als auch der PUK zurückgesetzt. Ferner kann der Benutzer eine neue PIN vergeben.

**Bezugszeichenliste**

| | |
|---|---|
| Kartenleser | 100 |
| Kartenleser | 102 |
| Chipkarte | 104 |
| Nutzerschnittstelle | 106 |
| Eingabefeld | 108 |
| Eingabefeld | 110 |
| Eingabefeld | 114 |
| Programminstruktionen | 116 |
| Programminstruktionen | 118 |
| kontaktlose Schnittstelle | 120 |
| Prozessor | 122 |
| Programminstruktionen | 124 |
| Programminstruktionen | 126 |
| Pogramminstruktionen | 128 |
| Programminstruktionen | 130 |
| Schnittstelle | 132 |
| Speicher | 134 |
| Speicherbereich | 136 |
| Speicherbereich | 138 |
| Fehlbedienungszähler | 140 |
| Register | 142 |
| Speicher | 144 |
| Fehlbedienungszähler | 146 |
| Register | 148 |
| Speicher | 150 |
| RFID-Chip | 152 |
| Aufdruck | 154 |
| Steuerungsprogramm | 156 |

## Patentansprüche

1. Verfahren zum Freischalten einer Chipkartenfunktion (128) einer Chipkarte (102), wobei zur Freischaltung der Chipkartenfunktion die Eingabe einer ersten Kennung erforderlich ist, und wobei die Chipkarte eine erste kontaktlose Schnittstelle (130) hat, mit folgenden Schritten:
- Eingabe einer zweiten Kennung in einen Kartenleser (100), der eine zweite kontaktlose Schnittstelle (118) hat,
- Übertragung einer Anforderung zur Fernüberprüfung der zweiten Kennung auf Übereinstimmung mit der ersten Kennung von der zweiten kontaktlosen Schnittstelle des Kartenlesers an die erste kontaktlose Schnittstelle der Chipkarte,
- Überprüfung durch die Chipkarte, ob die aktuell zur Verfügung stehende Anzahl von Eingabeversuchen für eine korrekte Eingabe der ersten Kennung zur Freischaltung der Chipkartenfunktion über einer vorgegebenen Mindestanzahl liegt, und wenn dies der Fall ist, Durchführung der Fernüberprüfung, und wenn dies nicht der Fall ist, Durchführung der folgenden Schritte: (i) Übertragung einer Anforderung zur Eingabe einer dritten Kennung in den Kartenleser von der ersten kontaktlosen Schnittstelle der Chipkarte an die zweite kontaktlose Schnittstelle des Kartenlesers, (ii) Eingabe der dritten Kennung in den Kartenleser, (iii) Übertragung der dritten Kennung von der zweiten kontaktlosen Schnittstelle des Kartenlesers an die erste kontaktlose Schnittstelle der Chipkarte, (iv) Vergleich der dritten Kennung mit einer in der Chipkarte gespeicherten vierten Kennung durch die Chipkarte, und nur wenn der Vergleich ergibt, dass die dritte Kennung mit der vierten Kennung übereinstimmt, Durchführung der Fernüberprüfung,
wobei die Chipkartenfunktion freigeschaltet wird, wenn die Fernüberprüfung zum Ergebnis hat, dass die zweite Kennung mit der ersten Kennung übereinstimmt, und wobei die Anzahl der aktuell zur Verfügung stehenden Eingabeversuche reduziert wird, wenn die zweite Kennung nicht mit der ersten Kennung übereinstimmt.

2. Verfahren nach Anspruch 1, wobei zumindest eines der folgenden Verfahren zur Fernüberprüfung verwendet wird: Strong Password Only Authentication Key Exchange (SPEKE), Diffie-Hellman Encripted Key Exchange (DH-EKE), Bellovin-Merritt Protokoll oder Password Authenticated Connection Establishment (PACE).

3. Verfahren nach Anspruch 1 oder 2, wobei es sich bei der ersten Kennung um einen PIN handelt, die in einem geschützten Speicherbereich (134) der Chipkarte gespeichert ist.

4. Verfahren nach Anspruch 1, 2 oder 3, wobei die vierte Kennung in einem geschützten Speicherbereich (136) der Chipkarte gespeichert ist und von der Chipkarte im Klartext visuell durch einen Benutzer erfassbar ist.

5. Verfahren nach Anspruch 4, wobei die vierte Kennung oder der Chipkarte aufgedruckt (154) ist oder auf einer Anzeigevorrichtung der Chipkarte angezeigt wird.

6. Verfahren nach einem der vorhergehenden Ansprüche, wobei die dritte Kennung verschlüsselt übertragen wird.

7. Verfahren nach Anspruch 6, wobei die Verschlüsselung der dritten Kennung mit einem symmetrischen Schlüssel erfolgt, der von dem Kartenleser und der Chipkarte mit Hilfe eines elliptischen Kurven Diffie-Hellman (ECDH) Verfahrens ermittelt wird.

8. Verfahren nach einem der vorhergehenden Ansprüche, wobei die Chipkarte gesperrt wird, wenn die aktuell zur Verfügung stehende Anzahl von Eingabeversuchen gleich Null ist und die Durchführung der Fernüberprüfung ergibt, dass die zweite Kennung nicht mit der ersten Kennung übereinstimmt, wobei eine erste Entsperrungskennung in einem geschützen Speicherbereich (138) der Chipkarte gespeichert ist, und das Verfahren die folgenden weiteren Schritte aufweist:
- Eingabe einer zweiten Entsperrungskennung in den Kartenleser,
- Übertragung einer Anforderung zur Durchführung einer Fernüberprüfung der zweiten Entsperrungskennung von der zweiten kontaktlosen Schnittstelle an die erste kontaktlose Schnittstelle,
- Überprüfung durch die Chipkarte ob die aktuell zur Verfügung stehende Anzahl von Eingabeversuchen für die korrekte Eingabe der ersten Entsperrungskennung über einer vorgegebenen Mindestanzahl liegt, und wenn dies der Fall ist, Durchführung der Fernüberprüfung, und wenn dies nicht der Fall ist, Durchführung der folgenden Schritte: (i) Übertragung einer Anforderung zur Eingabe einer dritten Kennung in den Kartenleser von der ersten kontaktlosen Schnittstelle der Chipkarte an die zweite kontaktlose Schnittstelle des Kartenlesers, (ii) Eingabe der dritten Kennung in den Kartenleser, (iii) Übertragung der dritten Kennung von der zweiten kontaktlosen Schnittstelle des Kartenlesers an die erste kontaktlose Schnittstelle der Chipkarte, (iv) Vergleich der dritten Kennung mit einer in der Chipkarte gespeicherten vierten Kennung durch die Chipkarte, und nur wenn der Vergleich ergibt, dass die dritte Kennung mit der vierten Kennung übereinstimmt, Durchführung der Fernüberprüfung,
wobei die Anzahl der aktuell zur korrekten Eingabe der ersten Entsperrungskennung zur Verfügung stehenden Eingabeversuche auf einen initialen Wert zurückgesetzt wird, wenn die Fernüberprüfung zum Ergebnis hat, dass die zweite Entsperrungskennung mit der ersten Entsperrungskennung übereinstimmt, und wobei die Anzahl der aktuell zur Verfügung stehenden Eingabeversuche zur Eingabe der ersten Entsperrungskennung reduziert wird, wenn die zweite Entsperrungskennung nicht mit der ersten Entsperrungskennung übereinstimmt.

9. Verfahren nach Anspruch 8, wobei unterschiedliche vierte Kennungen für die Ermöglichungen der Fernüberprüfung der ersten Kennung und zur Ermöglichung der Fernüberprüfung der ersten Entsperrungskennung verwendet werden.

10. Chipkarte mit zumindest einer Chipkartenfunktion (128), wobei zur Freischaltung der Chipkartenfunktion die Eingabe einer ersten Kennung erforderlich ist, mit:
- Mitteln (120, 126, 130) zum Empfangen einer Anforderung zur Durchführung einer Fernüberprüfung einer in einen Kartenleser (100) eingegebenen zweiten Kennung auf Übereinstimmung mit der ersten Kennung, wobei die Mittel (120, 126, 130) zum Empfangen eine erste kontaktlose Schnittstelle (130) aufweisen,
- Mitteln (126, 140, 142) zur Überprüfung durch die Chipkarte, ob die aktuell zur Verfügung stehende Anzahl von Eingabeversuchen für eine korrekte Eingabe der ersten Kennung zur Freischaltung der Chipkartenfunktion über einer vorgegebenen Mindestanzahl liegt,
- Mitteln zur Durchführung der Fernüberprüfung (122),
- Mitteln (120, 126) zur Durchführung der folgenden Schritte, wenn die aktuell zur Verfügung stehende Anzahl von Eingabeversuchen für die korrekte Eingabe der ersten Kennung nicht über einer vorgegebenen Mindestanzahl liegt : (i) Übertragung einer Anforderung zur Eingabe einer dritten Kennung in den Kartenleser von der ersten kontaktlosen Schnittstelle der Chipkarte an eine zweite kontaktlose Schnittstelle des Kartenlesers, (ii) Empfang der dritten Kennung durch die erste kontaktlose Schnittstelle der Chipkarte, (iii) Vergleich der dritten Kennung mit einer in der Chipkarte gespeicherten vierten Kennung, und nur wenn der Vergleich ergibt, dass die dritte Kennung mit der vierten Kennung übereinstimmt, Auslösung der Fernüberprüfung,
- Mitteln (120, 126) zur Freischaltung der Chipkartenfunktion, wenn die Fernüberprüfung zum Ergebnis hat, dass die zweite Kennung mit der ersten Kennung übereinstimmt, und wobei die Anzahl der aktuell zur Verfügung stehenden Eingabeversuche reduziert wird, wenn die zweite Kennung nicht mit der ersten Kennung übereinstimmt.

11. Chipkarte nach Anspruch 10, wobei die vierte Kennung in einem geschützten Speicherbereich (136) der Chipkarte gespeichert ist und von der Chipkarte im Klartext visuell durch einen Benutzer erfassbar ist.

12. Chipkarte nach Anspruch 10 oder 11, mit Mitteln (124) zur Aushandlung eines symmetrischen Schlüssels mit dem Kartenleser zum verschlüsselten Empfangen der dritten Kennung.

13. Chipkarte nach einem der vorhergehenden Ansprüche 10 bis 12, wobei die Chipkarte gesperrt ist, wenn die aktuell zur Verfügung stehende Anzahl von Eingabeversuchen gleich Null ist und eine Durchführung der Fernüberprüfung ergibt, dass die zweite Kennung nicht mit der ersten Kennung übereinstimmt, wobei eine erste Entsperrungskennung auf der Chipkarte gespeichert ist, und wobei die Mittel zum Empfangen (120, 126, 130) zum Empfangen einer Anforderung zur Durchführung einer Fernüberprüfung einer zweiten Entsperrungskennung ausgebildet sind, mit Mitteln (126, 146, 148) zur Überprüfung, ob die aktuell zur Verfügung stehende Anzahl von Eingabeversuchen für eine korrekte Eingabe der ersten Entsperrungskennung zur Freischaltung der Chipkartenfunktion über einer vorgegebenen Mindestanzahl liegt, wobei die Schritte (i) bis (iii) durchgeführt werden, wenn die aktuell zur Verfügung stehende Anzahl von Eingabeversuchen für eine korrekte Eingabe der ersten Entsperrungskennung zur Freischaltung der Chipkartenfunktion nicht über der vorgegebenen Mindestanzahl liegt.

14. Chipkarte nach Anspruch 13, wobei unterschiedliche vierte Kennungen für die Ermöglichungen der Fernüberprüfung der ersten Kennung und zur Ermöglichung der Fernüberprüfung der ersten Entsperrungskennung in der Chipkarte gespeichert sind.

15. Kartenlesegerät für eine Chipkarte (102) nach einem der Ansprüche 10 - 14, mit:
- einer zweiten kontaktlosen Schnittstelle (118) zur drahtlosen Kommunikation mit der ersten kontaktlosen Schnittstelle,
- Mitteln (106) zur Eingabe einer zweiten Kennung,
- Mitteln (156) zur Generierung einer Anforderung an die Chipkarte zur Durchführung einer Fernüberprüfung der zweiten Kennung auf Übereinstimmung mit der ersten Kennung durch den Kartenleser und die Chipkarte,
- Mitteln (114) zur Durchführung der Fernüberprüfung,
- Mitteln (156, 158) zum Empfangen einer Aufforderung von der Chipkarte zur Eingabe einer dritten Kennung, zur Eingabe der dritten Kennung, und zur Übertragung der dritten Kennung von der zweiten kontaktlosen Schnittstelle an die erste kontaktlose Schnittstelle der Chipkarte.

## Claims

1. A method for enabling a chip card function (128) of a chip card (102), the input of a first identifier being necessary for enabling the chip card function, and the chip card comprising a first contactless interface (130), comprising the following steps:
- inputting a second identifier in a card reader (100), which has a second contactless interface (118);
- transmitting a request for the remote check of the second identifier for agreement with the first identifier from the second contactless interface of the card reader to the first contactless interface of the chip card;
- checking, by the chip card, as to whether the presently available number of input attempts for a correct input of the first identifier for enabling the chip card function exceeds a predefined minimum number and, if this is the case, carrying out the remote check, and, if this is not the case, carrying out the following steps: (i) transmitting a request for the input of a third identifier in the card reader from the first contactless interface of the chip card to the second contactless interface of the card reader; (ii) inputting the third identifier in the card reader; (iii) transmitting the third identifier from the second contactless interface of the card reader to the first contactless interface of the chip card; (iv) comparing, by the chip card, the third identifier to a fourth identifier stored in the chip card, and carrying out the remote check only when the comparison shows that the third identifier agrees with the fourth identifier,
wherein the chip card function is enabled when the remote check shows that the second identifier agrees with the first identifier, and the number of the presently available input attempts is reduced when the second identifier does not agree with the first identifier.

2. The method according to claim 1, wherein at least one of the following methods is used for the remote check: Strong Password Only Authentication Key Exchange (SPEKE), Diffie-Hellman Encrypted Key Exchange (DH-EKE), Bellovin-Merritt Protocol or Password Authenticated Connection Establishment (PACE).

3. The method according to claim 1 or 2, wherein the first identifier is a PIN, which is stored in a protected memory area (134) of the chip card.

4. The method according to claim 1, 2 or 3, wherein the fourth identifier is stored in a protected memory area (136) of the chip card and visually detectable from the chip card in plain text by a user.

5. The method according to claim 4, wherein the fourth identifier or the chip card is imprinted (154) or displayed on a display device of the chip card.

6. The method according to any one of the preceding claims, wherein a third identifier is transmitted in encrypted form.

7. The method according to claim 6, wherein the encryption of the third identifier is carried out using a symmetric key, which is ascertained by the card reader and the chip card using an Elliptic Curve Diffie-Hellman (ECDH) method.

8. The method according to any one of the preceding claims, wherein the chip card is blocked when the presently available number of input attempts is equal to zero, and carrying out the remote check shows that the second identifier does not agree with the first identifier, a first unblocking identifier being stored in a protected memory area (138) of the chip card, and the method comprising the following further steps:
- inputting a second unblocking identifier in the card reader;
- transmitting a request for carrying out a remote check of the second unblocking identifier from the second contactless interface to the first contactless interface;
- checking, by the chip card, as to whether the presently available number of input attempts for the correct input of the first unblocking identifier exceeds a predefined minimum number and, if this is the case, carrying out the remote check, and, if this is not the case, carrying out the following steps: (i) transmitting a request for the input of a third identifier in the card reader from the first contactless interface of the chip card to the second contactless interface of the card reader; (ii) inputting the third identifier in the card reader; (iii) transmitting the third identifier from the second contactless interface of the card reader to the first contactless interface of the chip card; (iv) comparing, by the chip card, the third identifier to a fourth identifier stored in the chip card, and carrying out the remote check only when the comparison shows that the third identifier agrees with the fourth identifier,
wherein the number of the input attempts presently available for the correct input of the first unblocking identifier is reset to an initial value when the remote check shows that the second identifier agrees with the first unblocking identifier, and the number of the presently available input attempts for inputting the first unblocking identifier is reduced when the second unblocking identifier does not agree with the first unblocking identifier.

9. The method according to claim 8, wherein different fourth identifiers are used for making the remote check of the first identifier possible and for making the remote check of the first unblocking identifier possible.

10. A chip card including at least one chip card function (128), the input of a first identifier being necessary for enabling the chip card function, comprising:
- means (120, 126, 130) for receiving a request for carrying out a remote check of a second identifier input in a card reader (100) for agreement with the first identifier, wherein the means (120, 126, 130) for receiving comprise a first contactless interface (130);
- means (126, 140, 142) for checking, by the chip card, as to whether the presently available number of input attempts for a correct input of the first identifier for enabling the chip card function exceeds a predefined minimum number;
- means for carrying out the remote check (122);
- means (120, 126) for carrying out the following steps when the presently available number of input attempts for the correct input of the first identifier does not exceed a predefined minimum number: (i) transmitting a request for the input of a third identifier in the card reader from the first contactless interface of the chip card to a second contactless interface of the card reader; (ii) receiving, by the first contactless interface of the chip card, the third identifier; (iii) comparing the third identifier to a fourth identifier stored in the chip card, and triggering the remote check only when the comparison shows that the third identifier agrees with the fourth identifier; and
- means (120, 126) for enabling the chip card function when the remote check shows that the second identifier agrees with the first identifier, and the number of the presently available input attempts is reduced when the second identifier does not agree with the first identifier.

11. The chip card according to claim 10, wherein the fourth identifier is stored in a protected memory area (136) of the chip card and is visually detectable from the chip card in plain text by a user.

12. The chip card according to claim 10 or 11, comprising means (124) for negotiating a symmetric key with the card reader for the encrypted reception of the third identifier.

13. The chip card according to any one of the preceding claims 10 to 12, wherein the chip card is blocked when the presently available number of input attempts is equal to zero and carrying out the remote check shows that the second identifier does not agree with the first identifier, a first unblocking identifier being stored on the chip card, and the means for receiving (120, 126, 130) being designed to receive a request for carrying out a remote check of a second unblocking identifier, comprising means (126, 146, 148) for checking whether the presently available number of input attempts for a correct input of the first unblocking identifier for enabling the chip card function exceeds a predefined minimum number, the steps (i) to (iii) being carried out when the presently available number of input attempts for a correct input of the first unblocking identifier for enabling the chip card function does not exceed the predefined minimum number.

14. The chip card according to claim 13, wherein different fourth identifiers for making the remote check of the first identifier possible and for making the remote check of the first unblocking identifier possible are stored in the chip card.

15. A card reading device for a chip card (102) according to any one of claims 10 to 14, comprising:
- a second contactless interface (118) for the wireless communication with the first contactless interface;
- means (106) for inputting a second identifier;
- means (156) for generating a request for the chip card for carrying out a remote check of the second identifier for agreement with the first identifier by the card reader and the chip card;
- means (114) for carrying out the remote check:
- means (156, 158) for receiving a request from the chip card for inputting a third identifier, for inputting the third identifier, and for transmitting the third identifier from the second contactless interface to the first contactless interface of the chip card.

## Revendications

1. Procédé de déverrouillage d'une fonction de carte à puce (128) d'une carte à puce (102), où la saisie d'une première identification est nécessaire pour le déverrouillage de la fonction de carte à puce, et où la carte à puce a une première interface (130) sans contact, avec les étapes suivantes :
- la saisie d'un deuxième identifiant dans un lecteur de carte (100) qui a une deuxième interface (118) sans contact,
- la transmission d'une demande pour la vérification à distance du deuxième identifiant en ce qui concerne la concordance avec le premier identifiant de la deuxième interface sans contact du lecteur de carte au niveau de la première interface sans contact de la carte à puce,
- la vérification, par la carte à puce, si le nombre d'essais de saisie actuellement mis à disposition pour une saisie correcte du premier identifiant pour le déverrouillage de la fonction de carte à puce se situe au-dessus d'un nombre minimal prédéfini, et si c'est le cas, l'exécution de la vérification à distance, et si ce n'est pas le cas, l'exécution des étapes suivantes : (i) la transmission d'une demande pour la saisie d'un troisième identifiant dans le lecteur de carte à partir de la première interface sans contact de la carte à puce à la deuxième interface sans contact du lecteur de carte, (ii) la saisie du troisième identifiant dans le lecteur de carte, (iii) la transmission du troisième identifiant de la deuxième interface sans contact du lecteur de carte à la première interface sans contact de la carte à puce, (iv) la comparaison du troisième identifiant avec un quatrième identifiant stocké dans la carte à puce par la carte à puce, et uniquement si la comparaison révèle que le troisième identifiant correspond au quatrième identifiant, l'exécution de la vérification à distance,
où la fonction de carte à puce est déverrouillée lorsque la vérification à distance a eu pour résultat que le deuxième identifiant est en concordance avec le premier identifiant et où le nombre d'essais de saisie qui est actuellement à disposition est réduit lorsque le deuxième identifiant ne correspond pas avec le premier identifiant.

2. Procédé selon la revendication 1, dans lequel au moins un des procédés suivants est employé pour la vérification à distance : un échange de clé authentifié par mot de passe fort uniquement (SPEKE), un échange de clé encrypté de Diffie-Hellman (DH-EKE), un protocole de Bellovin-Merritt ou un établissement de connexion authentifié par mot de passe (PACE).

3. Procédé selon la revendication 1 ou la revendication 2, dans lequel il s'agit d'un code PIN dans le cas du premier identifiant qui est stocké dans une zone de mémoire (134) protégée de la carte à puce.

4. Procédé selon les revendications 1, 2 ou 3, dans lequel le quatrième identifiant est stocké dans une zone de mémoire (136) protégée de la carte à puce et peut être saisi de manière visuelle en texte clair par un utilisateur à partir de la carte à puce.

5. Procédé selon la revendication 4, dans lequel le quatrième identifiant est indiqué imprimé (154) sur la carte à puce ou est sur un dispositif d'affichage de la carte à puce.

6. Procédé selon l'une des revendications précédentes, dans lequel le troisième identifiant est transmis crypté.

7. Procédé selon la revendication 6, dans lequel le cryptage du troisième identifiant a lieu avec une clé symétrique qui est déterminée par le lecteur de carte et la carte à puce à l'aide d'un procédé de Diffie-Hellman de courbes elliptiques (ECDH).

8. Procédé selon l'une des revendications précédentes, dans lequel la carte à puce est bloquée lorsque le nombre d'essais de saisie actuellement mis à disposition est égal à zéro, et que l'exécution de la vérification à distance a pour résultat que le deuxième identifiant ne correspond pas au premier identifiant, où un premier identifiant de déblocage est stocké dans une zone de mémoire (138) protégée de la carte à puce, et le procédé présente les nouvelles étapes suivantes :
- la saisie d'un deuxième identifiant de déblocage dans le lecteur de carte à puce,
- la transmission d'une demande d'exécution d'une vérification à distance du deuxième identifiant de déblocage de la deuxième interface sans contact vers la première interface sans contact,
- la vérification par la carte à puce si le nombre d'essais de saisie actuellement disponible pour la saisie correcte du premier identifiant de déblocage se situe au-delà d'un nombre minimal prédéfini, et si c'est le cas, l'exécution de la vérification à distance, et si ce n'est pas le cas, l'exécution des étapes suivantes : (i) la transmission d'une demande pour la saisie d'un troisième identifiant dans le lecteur de carte à partir de la première interface sans contact de la carte à puce vers la deuxième interface sans contact du lecteur de carte, (ii) la saisie du troisième identifiant dans le lecteur de carte, (iii) la transmission du troisième identifiant de la deuxième interface sans contact du lecteur de carte vers la première interface sans contact de la carte à puce, (iv) la comparaison du troisième identifiant avec un quatrième identifiant stocké dans la carte à puce par la carte à puce, et uniquement si la comparaison révèle que le troisième identifiant correspond avec le quatrième identifiant, l'exécution de la vérification à distance,
où le nombre d'essais de saisie mis à disposition actuellement pour la saisie correcte du premier identifiant de déblocage est remis à sa valeur initiale lorsque la vérification à distance a pour résultat que le deuxième identifiant de déblocage est en concordance avec le premier identifiant de déblocage et où le nombre d'essais de saisie mis à disposition actuellement est diminué lorsque le deuxième identifiant de déblocage ne correspond pas au premier identifiant de déblocage.

9. Procédé selon la revendication 8, dans lequel quatre identifiants différents sont employés pour permettre la vérification à distance du premier identifiant et pour permettre la vérification à distance du premier identifiant de déblocage.

10. Carte à puce dotée d'au moins une fonction de carte à puce (128), dans laquelle la saisie d'un premier identifiant est nécessaire pour le déverrouillage de la fonction de carte à puce, dotée :
- de moyens (120, 126, 130) pour la réception d'une demande pour l'exécution d'une vérification à distance d'un deuxième identifiant indiqué dans un lecteur de carte (100) quant à sa concordance avec le premier identifiant, où les moyens (120, 126, 130) présentent une première interface (130) sans contact pour la réception,
- de moyens (126, 140, 142)) pour la vérification par la carte à puce si le nombre d'essais de saisie mis à disposition actuellement pour une saisie correcte du premier identifiant pour le déverrouillage de la fonction de carte à puce se situe au-delà d'un nombre minimal prédéfini,
- de moyens pour l'exécution de la vérification à distance (122),
- de moyens (120, 126) pour l'exécution des étapes suivantes si le nombre d'essais de saisie mis à disposition actuellement pour la saisie correcte du premier identifiant ne se situe pas au-delà d'un nombre minimal prédéfini : (i) la transmission d'une demande pour la saisie d'un troisième identifiant dans le lecteur de carte à partir de la première interface sans contact de la carte à puce vers la deuxième interface sans contact du lecteur de carte, (ii) la réception du troisième identifiant par la première interface sans contact de la carte à puce, (iii) la comparaison du troisième identifiant avec un quatrième identifiant stocké dans la carte à puce par la carte à puce, et uniquement si la comparaison révèle que le troisième identifiant correspond avec le quatrième identifiant, l'exécution de la vérification à distance,
- de moyens (120, 126) pour le déverrouillage de la fonction de carte à puce si la vérification à distance a pour résultat que le deuxième identifiant correspond au premier identifiant, et où le nombre d'essais de saisie mis à disposition actuellement est diminué lorsque le deuxième identifiant n'est pas correspondant au premier identifiant.

11. Carte à puce selon la revendication 10, dans lequel le quatrième identifiant est stocké dans une zone de mémoire (136) protégée de la carte à puce et peut être détecté visuellement en texte clair dans la carte à puce par un utilisateur.

12. Carte à puce selon la revendication 10 ou la revendication 11, dotée de moyens (124) pour la négociation d'une clé symétrique avec le lecteur de carte pour la réception cryptée du troisième identifiant.

13. Carte à puce selon l'une des revendications précédentes 10 à 12, où la carte à puce est bloquée lorsque le nombre d'essais de saisie mis à disposition actuellement est égal à zéro et qu'une exécution de la vérification à distance a pour résultat que le deuxième identifiant ne correspond pas au premier identifiant, où un premier identifiant de déblocage est stocké sur la carte à puce, et où les moyens de réception (120, 126, 130) pour la réception d'une demande pour l'exécution d'une vérification à distance d'un deuxième identifiant de déblocage sont conçus, avec des moyens (126, 146, 148) pour vérifier si le nombre d'essais de saisies mis à disposition actuellement pour une saisie correcte du premier identifiant de déblocage pour le déverrouillage de la fonction de carte à puce se situe au-delà d'un nombre minimal prédéfini, où les étapes (i) à (iii) sont exécutées lorsque le nombre d'essais de saisie mis à disposition actuellement pour une saisie correcte du premier identifiant de déblocage ne se situe pas au-delà du nombre minimal prédéfini.

14. Carte à puce selon la revendication 13, dans laquelle quatre identifiants différents sont stockés pour permettre la vérification à distance du premier identifiant et pour permettre la vérification à distance du premier identifiant de déblocage dans la carte à puce.

15. Lecteur de carte destiné à une carte à puce (102) selon l'une des revendications 10 à 14, doté
- d'une deuxième interface (118) sans contact pour la communication sans fil avec la première interface sans contact,
- de moyens (106) pour la saisie d'un deuxième identifiant,
- de moyens (156) pour la génération d'une demande à la carte à puce pour l'exécution d'une vérification à distance du deuxième identifiant concernant une concordance avec le premier identifiant par le lecteur de carte et la carte à puce,
- de moyens (114) pour l'exécution de la vérification à distance,
- de moyens (156, 158) de réception d'une demande de la carte à puce pour la saisie d'un troisième identifiant pour la saisie du troisième identifiant et pour la transmission du troisième identifiant de la deuxième interface sans contact vers la première interface sans contact de la carte à puce.
